# EUROPEAN PATENT APPLICATION

(11) **EP 3 392 641 A1**
(43) Date of publication of application: **24.10.2018**
(21) Application number: 16874960.4
(22) Date of filing: 16.12.2016
(51) Int. Cl.: G01N 1/26, G01N 15/06

(54) **DEVICE FOR CAPTURING PARTICLES PRESENT IN THE AIR, WHICH IS PORTABLE AND AUTONOMOUS**

(30) Priority: 18.12.2015 ES 201531836
(71) Applicant: Universidad Politécnica de Madrid, 28040 Madrid (ES)
(72) Inventor: NÚÑEZ HERNÁNDEZ, Andrés, 28040 Madrid (ES); GARCÍA RUIZ, Ana María, 28040 Madrid (ES); MORENO GÓMEZ, Diego Alejandro, 28040 Madrid (ES)
(74) Representative: Ungria López, Javier
(86) International application number: PCT/ES2016/070899
(87) International publication number: WO 2017/103316

(57) **Abstract**

The invention relates to a device for capturing particles present in the air, which is portable and autonomous, and comprises a container (1) having an inlet (2) for the air from the outside to the inside of the container (1), and an outlet (3) for the air from the inside of the container (1) to the outside; such that, between the air inlet (2) and outlet (3), the container (1) comprises a first air-capturing module (7) inside same, which in turn comprises: a first air-filtering means (4) that permits the passage of air and particles that are smaller than the pore size; and a first receptacle in turn comprising a first retaining plate (5) covered in a greasy substance or another adhesive surface on the largest anterior surface thereof, and configured to collect at least a portion of the particles present in the air.

## Description

### TECHNICAL FIELD OF THE INVENTION

The present invention relates to a device for capturing particles present in the air to be used in open spaces, which is located within the environmental sector, the state of the air and the measuring of the particles present in it.

The device for capturing particles present in the air object of the invention has the main objective of having an apparatus able to retain an elevated number of particles existing in an air sample from any outdoor space, which is autonomous without needing external power sources, as well as a compact design which enables it to be coupled to any type of transportation means, giving rise to a device that has an suitable aerodynamic behavior during the operations thereof; and where the capture of particles is performed in a simple manner, which enables it to be reused an indefinite number of times, guaranteeing a quick and efficient cleaning and start-up.

### BACKGROUND OF THE INVENTION

By way of introduction, the use and existence are known of a large number of devices for capturing particles present in the air, which are focused on measuring the quality of the air in closed environments, complying with the applicable legislation. To this end, the volume of air collected by said devices, as well as the sampling time, are set previously and are not modifiable or adaptable beyond the pre-set configuration. For this reason, there is a limitation of the use thereof with regard to the existence of applications that do not comply with the indicated volume and time requirements, for example in outdoor spaces where a sampling of a large volume of air as well as a large exposure time for collecting air particles are needed.

Additionally, and to this end, there is a growing interest in the microbiological studies on air in open environments and in how the microbiota of the air, called aerobiota, is affected by different factors such as air pollution caused by transportation means, polluting emissions from nearby industries, etc. To do so, the sampling from open areas and environmental studies on biodiversity require greater flexibility as far as the time and volume of air sampled, since the microbiological burden can vary according to the environment, the altitude, the season, etc.

In relation to the state of the art that is known until now and associated with devices for capturing particles in the air, the device for capturing described in US patent US-3001914 is known, in which a container is disclosed which has opposing air inlet and outlets; and it comprises, on the inside thereof, a plurality of perforated plates with diameters decreasing in the direction from the inlet to the air outlet, such that each plate acts as filtering means; and in an inserted manner a Petri dish is positioned with cultivation means that act as retaining means imbedded between two filtering plates. Likewise, the device has vacuum-generating means able to be coupled to the air outlet, such that the suction of air is performed at a predetermined speed towards the inside of the container. Thus, the described device is specific for obtaining viable organisms, bacteria, for the subsequent cultivation and study thereof. However, said device has a series of inconveniences, among which the need to use a vacuum pump to achieve said air suction is notable, which thereby increases the volume and weight of the device, decreasing the portability thereof; apart from limiting the operational autonomy thereof upon needing external energy sources for the operations of said vacuum pump. Furthermore, the use of cultivation means as a retaining surface implies a limitation as far as the use time thereof, since said cultivation means tend to become dehydrated due to the continuous passage of air across them.

In a similar manner, the existence of English patent GB-2496995 is known, in which a device for capturing air particles is described, which has a container comprising an air inlet and two air outlets, where one of them is configured to have vacuum-generating means to force the movement and circulation of air through the inside of the container; and the second outlet has a collection tank for collecting particles the mouth thereof facing the airflow coming from the air inlet to the inside of the container; however, once again, the device described herein needs the use of vacuum-generating means that cause difficulty in the transportation and installation thereof in outdoor areas.

It is for this reason that, in light of the main inconveniences referred to, both the difficulty of being able to perform measurements and capturing the air particles in outdoor spaces, largely due to lack of autonomy of the devices for capturing that currently exist; and the low versatility that they offer when modifying the pre-set options, it becomes necessary to have a new device for capturing particles present in the air that is able to solve said inconveniences, such that it can be adapted to the sampling time necessary to satisfy the needs of the user; which enables the volume of air sampled to be known, being able to have a registry of the variations in the air flow that crosses through the device as the samples are taken; and which has collection means that are able to be sterilized and are easy to reuse, and all of this with the use of entities that are simple, adaptable to any surroundings, and perfectly applicable industrially.

### DESCRIPTION OF THE INVENTION

The invention relates to a device for capturing particles present in the air, which comprises a container having an inlet for the air from the outside to the inside of the container, and an outlet for the air from the inside of the container to the outside of the container; such that, between the air inlet and outlet, the container comprises a first air-capturing module inside same, which comprises:
- first air-filtering means, configured to retain particles with dimensions greater than or equal to a predetermined size, and permit the passage of air and particles smaller than said predetermined size; and
- a first receptacle in turn comprising a first retaining plate covered, at least partially, in a greasy substance or another adhesive surface on the largest anterior surface thereof, and configured to collect at least a portion of the particles present in the air.

Thus, it is seen how the device object of the invention is configured as a container with an air inlet and outlet, and thus having an unlimited capture volume controlled by the user, where once the air enters the inside of the container, it has two functional physical entities:
- The first entity refers to the first air-filtering means, which are not configured to act as particle-collecting means, but are rather configured to retain particles with dimensions greater than or equal to a predetermined size, and permit the passage of air and particles with smaller than said predetermined size.
- The second entity refers to a first receptacle, the concept of a receptacle being understood as an inner space suitable for the housing and circulation of air throughout the inside thereof, which in turn comprises a first retaining plate covered, at least partially, in a greasy substance or another adhesive surface on the largest anterior surface thereof, and configured to collect at least a portion of the particles present in the air. It is necessary to clarify that the choice between a greasy substance or an adhesive surface is independent from the functional objective of both entities, since both have the purpose of gathering and collecting the air particles in a quick and effective way. Such that in the case of deciding to use a greasy substance, it has, as the very name indicates, an oily, sticky quality that collects said particles. This is a simple yet highly effective solution, since the user can locate and position the device for capturing in any location, perform the capture and subsequently collect the greasy substance with the particles stuck to it, in order to proceed to the analysis and sampling thereof. Such that, by way of example, said device object of the invention can be used for the retrieval and subsequent analysis of DNA, RNA, organisms or specific metabolites. In a similar manner, if an adhesive surface is used, it can be, for example, one that is adhesive on both sides, which is also removable for the collection of the particles adhered to it in a quick and simple manner, this solution being complementary to the use of the greasy substance.

To clarify, it is seen how a "first" module is described which in turn comprises a "first" air-filtering means, "first" receptacle and "first" retaining plate; where said ordinal adjective is not limiting nor does it imply the obligatory need to use a "second" module with the previous physical entities indicated; but it is described in such a manner so as to clarify possible preferred embodiments in which the existence of "second" modules for capturing air particles pertaining to the device object of the invention is in fact indicated.

It is worth noting that the device for capturing particles present in the air does not need external means to force the air to the inside of the container, and thus it does not need vacuum generators or similar which increase the weight and volume thereof and also make the device more expensive, as opposed to the known state of the art, and is thus ideal to be used in open spaces.

Considering the possibility in which said device object of the invention is coupled to mobile transportation means, for example ground, air and aquatic vehicles and even light vehicles such as drones, which generate an air current forced towards the inlet of the container. And where said quality is caused by the effects of the described device, the compactness thereof and the low weight of the main entities thereof.

Likewise, and in able to quantify the air flow that circulates through the device, the preferred option is described in which it comprises an air flow meter coupled to the air outlet of the container, which is configured to measure the air flow that circulates through said container. And in order to be able to date and store the data measured by the flow meter, it is described how the device can comprise a data registration module connected to the flow meter and configured to store the measurements of the air flow evaluated by said flow meter; where both the flow meter and the data registration module have energy sources that are rechargeable and, therefore, autonomous for the use thereof outdoors. It should be noted how the assembly made up of the flow meter and the data registration module can be housed in a container that is able to be coupled to the container belonging to the device for capturing object of the invention, resulting in a device that is compact, mobile, autonomous and with aerodynamic behavior that enables the placement thereof in any transportation means.

It should be noted that, in absence of the data registration module, the flow meter can optionally send the collected air flow data to a computer or data processor through a wireless connection and/or that is able to be seen in real time. The option is envisaged in which said flow meter can be connected to any other device responsible for receiving and sending the flow data measured by said flow meter, preferably with the data being sent wirelessly.

In relation to the greasy substance that covers, at least partially, the largest anterior surface of the first retaining plate, it can be Vaseline. This meets the sterilization needs necessary to not contaminate the collected particle samples, and where, to this end, the materials of the air filtering means and the retaining plates are materials that are sterile and/or able to be sterilized such as metallic materials made from light alloys, plastics, glasses, etc.

In a preferred embodiment, the possibility is envisaged of the air filtering means being made up of a plate perforated with holes with predefined diameters, this being a simple, effective and known solution in the state of the art, and which serves as a barrier for the passage of large particles not wanted in the sampling.

In an optional and preferred manner, the container comprises, between the inlet and the air inlet and the air outlet, one or several second modules for capturing air that in turn comprise second filtering means and a second retaining plate respectively, and said at least one second module located after the first module, such that a modular structure of filtering means and retaining plates covered in Vaseline is configured, increasing the particle retention effectiveness of the device object of the invention. Thus, it can be described how the air enters the container through the inlet thereof, said air is filtered in the first filtering means of the first module, and then hits the anterior surface of the retaining plate where a series of particles are retained in order to subsequently pass to the second module where it meets second air filtering means and a second retaining plate; and so on until the air leaves through the outlet of the container. In said outlet the flow meter in which the air flow is measured per unit of time that it circulates through the container can be coupled, and the data registration module proceeds to date the air flow amounts measured by the flow meter.

In this respect, and associated to how to define a path of the air through the inside of the container, the preferred option is envisaged in which the air filtering means in turn comprise a plurality of perimeter projections configured to come into contact with the upper edge of the retaining plate; such that said retaining plate is embedded between the perimeter projections defining a path of the air introduced into the container, where:
a) the air circulates through the retaining means until it hits the largest anterior surface of the retaining plate; and
b) the air circulates radially to the outer outline of the first retaining plate; and
c) the air circulates through the existing gaps between the perimeter projections of the perforated plate.

Likewise, and in order to fasten the retaining plate of the last module of the container, it is described how the outlet of the container comprises a plurality of lugs configured to come into contact with the largest posterior face of the retaining plate; such that said retaining plate is embedded between the perimeter projections and the lugs defining a path of the air to be taken out of the container, where, and after step c):
d) the air circulates through the gaps existing between the lugs of the outlet of the container; and
e) the air is expelled through the outlet of the container.

And in the case of the use of more than one air-capturing module, it is then when the second air-capturing module comprises a plurality of lugs configured to come into contact with the largest posterior face of the retaining plate of the first module for capturing; such that the retaining plate of the first module is embedded between the perimeter projections and the lugs, defining a path for the air inside the container, where, and after step c):
d) the air circulates through the gaps existing between the lugs of the second module of the container; and
e) the air is driven towards the air filtering means of the second air-capturing module.

The preferred option is described in which the air inlet and/or outlet in the container comprises blocking means configured to modify the passage area of the air from the outside to the inside of the container and/or from the inside of the container to the outside. These are able to block or increase the passage of air to the inside of the container and, in this way, modify the air flow as controlled by the user, maintaining a constant inlet air speed. Likewise, the air flow to the outlet can be closed or narrowed, creating back pressures in the container belonging to the device object of the invention, again as controlled by the user.

If physical and chemical parameters are to be measured or quantified during the capture of the air particles, the possibility is envisaged of the device object of the invention comprising non-biological sensors for capturing physical and chemical parameters of the air coupled to the outlet of said container; where said sensors do not substantially increase the mass or the volume of the entire device, guaranteeing the autonomy of it for the application thereof in open spaces.

Finally, and although it is not a preferred option, the option is described in which the device can have an apparatus for driving air to the inside of the container, and that is coupled to the inlet of the container. Such that an air current is forced when the device is in a static position, being able to be controlled remotely through control means at a distance.

Thus, with the proposed invention, a device for capturing particles present in the air is obtained which is perfect to be used in open spaces, likewise having an autonomous configuration without needing external power sources, apart from a compact design that enables it to be coupled to any type of transportation means; and where the capturing of particles is carried out in a simple manner, which enables it to be reused an indefinite number of times, with air inlet flow speeds able to be varied by the user and with a registry thereof.

### DESCRIPTION OF THE DRAWINGS

As a complement to the description provided herein, and for the purpose of helping to make the characteristics of the invention more readily understandable, in accordance with a preferred practical exemplary embodiment thereof, said description is accompanied by a series of figures constituting an integral part of the same, which by way of illustration and not limitation represent the following:
Figure 1.- Shows a first exploded three-dimensional view of the device for capturing particles present in the air object of the invention.
Figure 2.- Shows a second exploded three-dimensional view of the device for capturing particles present in the air object of the invention.
Figure 3.- Shows a three-dimensional view where a series of capturing modules are coupled together, one of the capturing plates ready to be coupled to the corresponding module being seen.
Figure 4.- Shows a first three-dimensional view where the modules are coupled to the inlet and the outlet, and are ready to be coupled in the container of the device for capturing particles present in the air object of the invention.
Figure 5.- Shows a second three-dimensional view where the modules are coupled to the inlet and the outlet, and are ready to be coupled in the container of the device for capturing particles present in the air object of the invention.
Figure 6.- Shows a first three-dimensional view where the modules, inlet and outlet are housed in the container, the inlet of air to the inside thereof being seen.
Figure 7.- Shows a second three-dimensional view where the modules, inlet and outlet are housed in the container, the inlet of air from the inside thereof being seen.
Figure 8.- Shows a three-dimensional view where the modules, inlet and outlet are housed in the container, and in the outlet thereof the flow meter and the data registration module are coupled.
Figure 9.- Shows a three-dimensional view where the modules, inlet and outlet are housed in the container, and the flow meter and the data registration module are housed in a receptacle coupled in turn to said container.
Figure 10.- Shows a second three-dimensional view where the modules, inlet and outlet are housed in the container, and the flow meter and the data registration module are housed in a receptacle coupled in turn to said container.
Figure 11.- Shows a third three-dimensional view where the modules, inlet and outlet are housed in the container, and the flow meter and the data registration module are housed in the tank, where a side closing of the receptacle enables the outlet of air from the flow meter.

### PREFERRED EMBODIMENT OF THE INVENTION

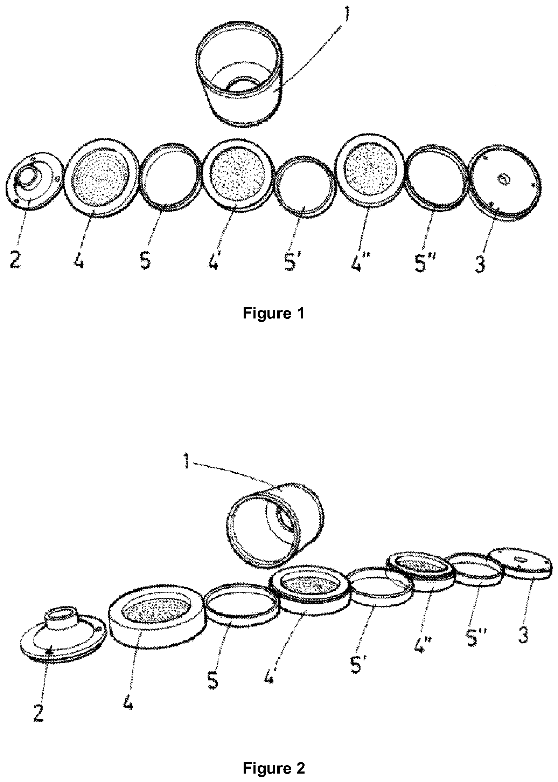

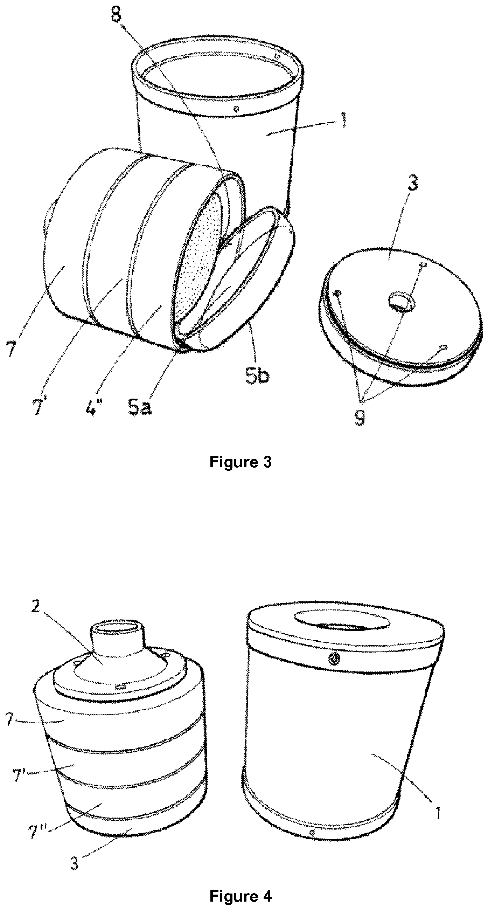

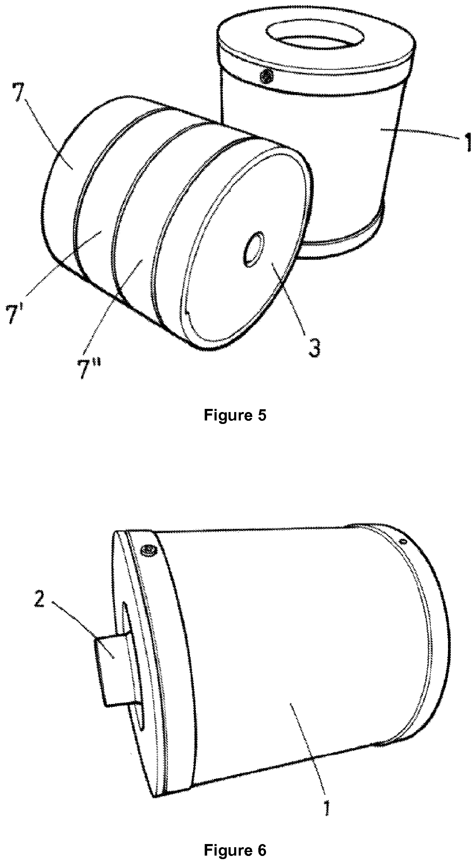

With reference to figures 1 to 7, it can be seen how the device for capturing particles present in the air object of the invention comprises:
- A cylindrical container (1) made from plastic material.
- An air inlet (2) from the outside to the inside of the tank (1) which has a cylindrical configuration made from metallic material, the outlet of which has a frustoconical geometry with blocking means, which are configured to modify the passage area of the air from the outside to the inside of the container (1).
- An air outlet (3) from the inside of the container (1) to the outside of the container (1); which has a cylindrical configuration made from metallic material, the outlet of which has a circular hole with blocking means, which are configured to modify the passage area of the air from the inside of the container (1) to the outside.
- A series of capturing modules (7, 7', 7") located between the air inlet (2) and outlet (3), where each air-capturing module (7) in turn comprises: air-filtering means (4, 4', 4"), configured to retain particles larger than or equal to a predetermined size, and permit the passage of air and particles smaller than said predetermined size; and a first receptacle in turn comprising a retaining plate (5, 5', 5") covered, at least partially, in a greasy substance made from Vaseline, and covered on the largest anterior surface (5a) thereof, and configured to collect at least part of the particles present in the air. Where the filtering means (4, 4', 4") consist of a plate perforated with holes with predefined diameters, which is made from metallic material able to be sterilized; and the retaining plates (5, 5', 5") are made from a plastic material able to be sterilized with a likewise cylindrical configuration.

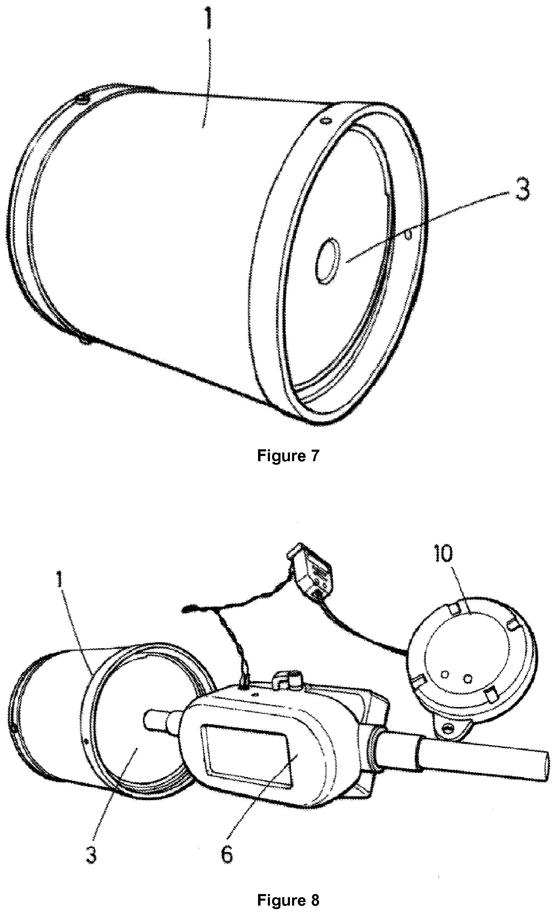

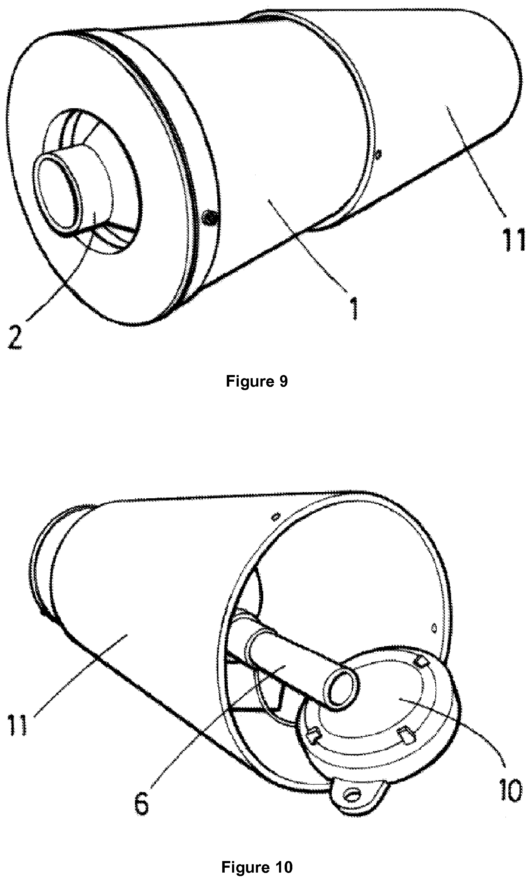

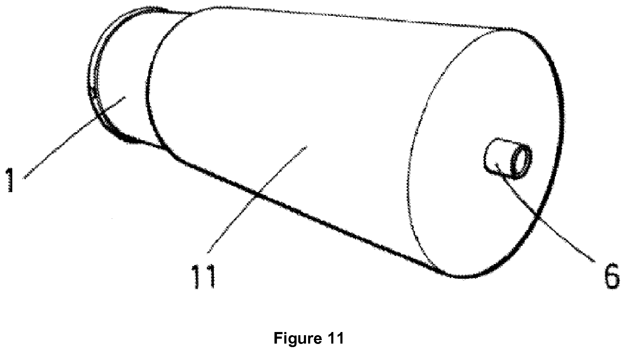

Likewise, it is seen in figures 8 to 11 how an air flow meter (6) is coupled at the air outlet (3) of the container (1), and configured to measure the air flow that circulates through said container (1). Likewise, a data registration module (10) is in turn connected to the flow meter (6) and is configured to store the measurements of the air flow evaluated by said flow meter (6).

In relation to how to group together the container (1), the flow meter (6) and the registration module (10), it is seen how the flow meter (6) and the registration module (10) are gathered in a cylindrical container (11) where one of the mouths thereof is coupled to the container (1), and the other mouth enables the outlet of the flow meter (6) to the outside.

The invention has been described according to preferred embodiments thereof, but for the person skilled in the art, it will be evident that multiple variations can be introduced in said preferred embodiments without departing from the object of the invention as has been claimed.

## Claims

1. A device for capturing particles present in the air which is portable and autonomous for knowing the biodiversity in the air environment by analyzing the DNA, RNA, organisms or specific metabolites from said particles, which comprises a container (1) that has an air inlet (2) from the outside to the inside of the container (1), and an air outlet (3) from the inside of the container (1) to the outside of the container (1); the device being **characterized in**:
- a compact design that enables it to be coupled to any type of transportation means (ground, air and/or water), thus generating a forced air current to the inlet (2) of the container (1);
- that between the air inlet (2) and outlet (3), the container (1) comprises a first air-capturing module (7) inside same which is able to be amplified with one or several air-capturing modules (7',7");
- that each module (7) and successive second air-capturing modules (7',7") located between the air inlet (2) and outlet (3), in turn comprises: air-filtering means (4, 4', 4"), configured to retain particles larger than or equal to a predetermined size, and permit the passage of air and particles smaller than said predetermined size; and a first receptacle in turn comprising a retaining plate (5, 5', 5") covered, at least partially, in a greasy substance or another adhesive surface and covered on the largest anterior surface (5a) thereof, and configured to collect at least part of the particles present in the air.

2. The device for capturing particles present in the air, according to claim 1, **characterized in that** it comprises an air flow meter (6) coupled to the air outlet (3) of the container (1), and configured to measure the air flow that circulates through said container (1).

3. The device for capturing particles present in the air, according to claim 2, **characterized in that** it comprises a data registration module (10) connected to the flow meter (6) and configured to store the measurements of the air flow evaluated by said flow meter (6).

4. The device for capturing particles present in the air, according to any of the preceding claims, **characterized in that** the air filtering means (4, 4', 4") are made up of a plate perforated with holes with predefined diameters.

5. The device for capturing particles present in the air, according to any of the preceding claims, **characterized in that** the retaining plate (5, 5', 5") is made from a material that is sterile and/or able to be sterilized.

6. The device for capturing particles present in the air, according to any of the preceding claims, **characterized in that** filtering means (4, 4', 4") are made from a material that is sterile and/or able to be sterilized.

7. The device for capturing particles present in the air, according to any of the preceding claims, **characterized in that** the air inlet (2) and/or outlet (3) in the tank (1) are made from a material that is sterile and/or able to be sterilized.

8. The device for capturing particles present in the air according to any of the preceding claims **characterized in that** the air inlet (2) and/or outlet (3) in the tank (1) comprises blocking means configured to modify the passage area of the air from the outside to the inside of the container (1) and/or from the inside of the container (1) to the outside.

9. The device for capturing particles present in the air, according to any of the preceding claims, **characterized in that** it has an apparatus for driving air to the inside of the container (1), and that is coupled to the inlet (2) of the container (1).

10. The device for capturing particles present in the air, according to any of the preceding claims, **characterized in that** it comprises non-biological sensors for capturing physical and chemical parameters of the air coupled to the outlet (3) of said container (1).
